# EUROPÄISCHE PATENTSCHRIFT

(11) **EP 2 034 221 B1**
(45) Veröffentlichungstag und Bekanntmachung des Hinweises auf die Patenterteilung: **05.12.2012**
(21) Anmeldenummer: 07020472.2
(22) Anmeldetag: 19.10.2007
(51) Int. Cl.: F16H 47/04, B62M 19/00

(54) **Triebwerk für ein Kraftfahrzeug**
Power unit for a motor vehicle
Unité d'entrainement pour véhicule automobile

(30) Priorität: 24.10.2006 AT 17852006
(43) Veröffentlichungstag der Anmeldung: 11.03.2009
(73) Patentinhaber: hofer forschungs- und entwicklungs GmbH, 4451 Garsten (AT)
(72) Erfinder: Aitzetmüller, Heinz, 4817 St. Konrad (AT); Stöckl, Dieter, 4400 Steyr (AT); Flachs, Reinhard, 4073 Wilhering (AT); Hofer, Johann, Paul, 39057 Girlan (IT); Hofer, Markus, 4451 Garsten (AT)
(74) Vertreter: Cremer, Christian

(56) Entgegenhaltungen:
- EP-A1- 1 371 279
- DE-A1- 10 248 400
- DE-A1- 19 954 894
- DE-A1-102005 010 015

## Beschreibung

Die Erfindung bezieht sich auf ein Triebwerk für ein Kraftfahrzeug nach dem Oberbegriff des Patentanspruchs 1, vorzugsweise für ein Motorrad, und ein Verfahren zum Betrieb des Triebwerks.

Es ist ein Motorrad mit einem hydrostatischen kontinuierlich variablen Getriebe bekannt, DE 39 04 945 C2 (Inhaberin: Honda Giken Kogyo K. K.; Anmeldetag: 17.02.1989), das eine Taumelscheiben-Hydraulikpumpe umfasst. Eine Kurbelwelle einer den Antrieb des Motorrads bewerkstelligenden Brennkraftmaschine sowie das Getriebe sind in einem gemeinsamen Gehäuse untergebracht. Das Getriebe besitzt eine Eingangswelle und eine Ausgangswelle, die parallel zur Kurbelwelle angeordnet sind. Die Kurbelwelle treibt die Eingangswelle über eine Primär- Drehzahluntersetzung an, während die Ausgangswelle ein Hinterrad des Motorrads unter Zwischenschaltung einer Sekundär-Drehzahluntersetzungseinrichtung beeinflusst.

Aus der DE 101 26 105 A1 (Anmelderin: Suzuki K. K.; Prioritätstag: 30.05.2000) geht ein Triebwerk für ein Motorrad hervor, welches Triebwerk eine Motoreinheit und eine Getriebeeinheit aufweist. In der Getriebeeinheit sind eine Eingangswelle und eine Ausgangswelle drehbar in einem vorderen bzw. hinteren Bereich eines weiteren, von einem Motorblock-Gehäuse verschiedenen Gehäuses gelagert, um eine Getriebeeinrichtung zu bilden.

In der DE 101 00 562 A1 (Anmelderin: Suzuki K. K.; Prioritätstag: 11.01.2000) wird eine Antriebseinheit für ein Klein-Fahrzeug behandelt, in das die Antriebseinheit und eine damit schwenkbar gekoppelte Übertragungsvorrichtung eingebaut sind. Die Antriebseinheit ist in drei Abschnitte aufgeteilt, nämlich einen Motorblock, einen Getriebeteil und ein Differentialteil. Das Getriebeteil ist in einem Getriebegehäuse untergebracht, in dem ein V-Riemen-Automatikgetriebe (Drehzahl- oder Geschwindigkeits Änderungsgetriebe) angeordnet ist.

In einem leistungsverzweigten stufenlosen Automatgetriebe nach DE 102 48 400 A1 (Anmelderin: ZF Friedrichshafen AG; Anmeldetag: 17.10.2002) wird Antriebsleistung über eine Zahnradübersetzung, die dem stufenlosen Getriebe vorgelagert ist, und eine Zahnradübersetzung, die dem stufenlosen Getriebe nachgelagert ist, einem Summierdifferential zugeführt. Mit dem stufenlosen Getriebe solle ein Rückwärtsgang und eine Anfahrtskupplung ersetzt werden. Es können sich erhöhte Reibungsverluste vor der Einkopplung der Leistung in das Summierdifferential ergeben, was den Wirkungsgrad begrenzt.

Nach der DE 199 54 894 A1 (Anmelder: Liebherr, M.; Prioritätstag: 25.05.1999) ist ein Leistungsverzweigungsgetriebe für Traktoren bekannt, bei dem eine Pumpe zum Antrieb mit der Eingangswelle verbunden ist, welche der hydraulischen Versorgung eines Hydromotors dient, der über einer Welle das Sonnenrad eines Planetengetriebes treibt. An dem Planetengetriebe wird auch ein mechanischer Leistungszweig eingekoppelt. Die Leistung wird im weiteren Verlauf über eine Hohlwelle dem Ausgang zuführt. Mit der Getriebeauslegung soll der hydraulische Leistungsanteil möglichst gering gehalten werden um eine für Nutzmaschinen wichtige hohe Effizienz des mechanischen Zweigs zu bewahren und den variablen Zweig hauptsächlich zur Lenkung einzusetzen. Die DE 19954894A1 offenbart ein Trichwerk, welches into den Wortlout des Oberbegriffs des Anspruchs 1 fällt.

Eine landwirtschaftliche Erntemaschine mit einem Leistungsverzweigungsgetriebe ist weiterhin in der EP 1 371 279 A1 (Anmelderin: CNH Belgium N.V.; Prioritätstag: 11.06.2002) offenbart. Darin wird eine hydraulische Pumpe an einer Nebenwelle von einem Motor über ein Stirnradgetriebe angetrieben. Der durch die Pumpe betätigte hydraulische Motor treibt über eine Welle wiederum ein Sonnenrad eines Planetengetriebes, welches auch einen mechanischen Zweig einkoppelt. Die Ausgangswelle mündet in ein weiteres Schaltgetriebe einer Emtemechanik. Allerdings ist unklar wie das Getriebe führ die Fahrbewegung der Erntemaschine beitragen soll.

Für die kontinuierliche Geschwindigkeitsänderung eines Motorrads erläutert DE 10 2005 010 015 A1 (Anmelderin: Honda Motor Co. Ltd.; Prioritätstag: 12.03.2004) eine Kupplungsvorrichtung für ein hydrostatisches, kontinuierlich veränderliches Getriebe, wobei in der Antriebseinheit mittels Kupplungsventil in einem Ölkanal zwischen einer Hydraulikpumpe und einem Hydraulikmotor die Übertragung einer Drehung geregelt wird.

Es ist Aufgabe der Erfindung ein Triebwerk für ein Kraftfahrzeug, vorzugsweise Motorrad zu schaffen, das sich bei einfacher Bauweise durch gute Funktion auszeichnet.

Nach der Erfindung wird diese Aufgabe durch die Merkmale des Patentanspruchs 1 und einem Verfahren nach Patentanspruch 13 gelöst. Weitere, die Erfindung ausgestaltende Merkmale, sind in den Unteransprüchen enthalten.

Die mit der Erfindung hauptsächlich erzielten Vorteile sind darin zu sehen, dass durch die Kombination der Hydrostateinrichtung und des Summierplanetengetriebes in Verbindung mit der Brennkraftmaschine ausgezeichnete Voraussetzungen zum Betrieb eines Motorrads mit dem Triebwerk gegeben sind. Dabei stellen sowohl die Hydrostateinrichtung wie auch das Summierplanetengetriebe technische Systeme dar, die mit gezielter technischer Leistung für den geplanten Einsatz weiterentwickelbar sind. Dies gilt auch für das Stirnradgetriebe zwischen Brennkraftmaschine und Hydrostateinrichtung sowie die Komponente Hydraulikpumpe und Hydraulikmotor der besagten Hydrostateinrichtung. Die vorbildliche Funktion des Triebwerks wird auch noch durch die Kupplung und die Bremse bzw. eine geeignete andere Festsetzeinrichtung für das Hohlrad des Summierplanetengetriebes unterstützt. Überdies ist das Triebwerk deshalb durchdacht, well aufgrund der beschriebenen Komponenten bzw. ihr geschicktes Zusammenwirken eine gesonderte Rückwärtsgangeinrichtung entfallen kann. Schließlich setzt das aufgezeigte Verfahren zum Betrieb des Motorrads neue Maßstäbe im Kraftfahrzeugbau.

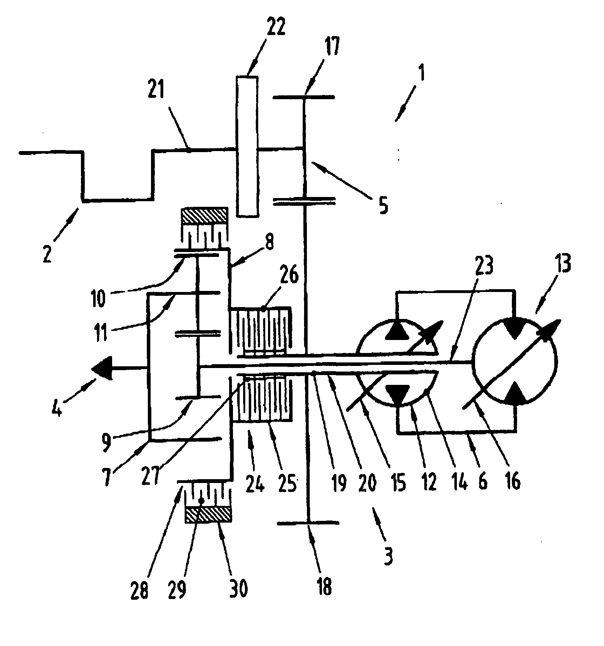

Die eine einzige Figur umfassende Zeichnung gibt ein schematisches Triebwerk für ein Motorrad wieder, das nachstehend näher erläutert wird.

Ein Triebwerk 1 für ein nicht abgebildetes Motorrad einspuriger oder mehrspuriger bzw. leichter oder schwerer Gattung, einschließlich solcher Ausführungen, die auf der Strasse und im Gelände -ON ROAD, OFF ROAD- bewegbar sind, umfasst eine Brennkraftmaschine 2 und ein Getriebe 3. Das Getriebe 3 führt zu einer Abtriebswelle 4, mit der ein oder mehrere Räder des Motorrads angetrieben werden. Die Brennkraftmaschine 2 wirkt unter Zwischenschaltung einer als Stirnradgetriebe 5 ausgebildeten Kraftübertragungseinheit mit einer Hydrostateinrichtung 6 zusammen, die in Wirkverbindung mit einem zur Abtriebswelle 4 führenden Summierplanetengetriebe 7 steht.

Das Summierplanetengetriebe 7 ist mit einem Hohlrad 8 und einem Sonnenrad 9 versehen. Zwischen Hohlrad 8 und Sonnenrad 9 ist wenigstens ein Planetenrad 10 wirksam, das von einem mit der Abtriebswelle 4 verbundenen Planetenträger 11 gehalten wird. Die Hydrostateinrichtung 6 besitzt eine Hydraulikpumpe 12 und einen Hydraulikmotor 13. In die Hydraulikpumpe 12 ist eine einen auslenkbaren Stellring 14 aufweisende erste Stelleinrichtung 15 integriert, mit der das Fördervolumen der Hydraulikpumpe 12 veränderbar ist. Der Hydraulikmotor 13 ist mit einer zweiten Stelleinrichtung 16 ausgestattet, über die das Schluckvolumen des besagten Hydraulikmotors beeinflussbar ist.

Das Stirnradgetriebe 5 setzt sich aus einem ersten Zahnrad 17 und einem zweiten Stirnrad 18 zusammen, das mit dem ersten Zahnrad 17 kämmt und unter Zwischenschaltung einer ersten als Hohlwelle 19 ausgeführten Verbindungswelle 20 mit der Hydraulikpumpe 12 zusammenarbeitet. Darüber hinaus ist zwischen dem ersten Zahnrad 17 und einer Kurbelwelle 21 der Brennkraftmaschine 2 ein Schwingungsdämpfer 22 vorgesehen. Der Hydraulikmotor 13 treibt über eine zweite Verbindungswelle 23 das Sonnenrad 9 des Summierplanetengetriebes 7 an. Dabei ist die zweite Verbindungswelle 23 koaxial zur ersten Verbindungswelle 20 ausgerichtet, und die erste Verbindungswelle 20 umgibt zumindest abschnittsweise die zweite Verbindungswelle 23.

Zwischen der Hohlwellenanordnung 20 und dem Hohlrad 8 ist eine Kupplung 24, vorzugsweise der Gattung Mehrscheiben-Reibungskupplung 25, vorgesehen. Letztere ist als Lastschaltkupplung ausgeführt und mit einem Reibscheiben tragenden Korb 26 und einer Reibscheiben aufnehmenden Nabe 27 versehen. Die Kupplung 24 bzw. Mehrscheiben-Reibungskupplung 25 ist einerseits mit der ersten Verbindungswelle 20 und andererseits mit dem zusammenwirkenden Hohlrad 8 des Summierplanetengetriebes 7 verbunden. Genauer gesagt, der Korb 26 ist baulich mit dem Hohlrad 8 vereinigt; die Nabe 27 mit der ersten Verbindungswelle 20. Im Übrigen ist das Holrad 8 an seiner Außenseite 28 mit einer Bremse 29 versehen, die sich an einem festen Gehäuse 30 abstützt. Anstelle der Bremse 29 kann auch eine formschlüssige Verbindung - bspw. eine Klinke - zur Festsetzung des Hohlrads 8 eingesetzt werden.

### Verfahren zum Betrieb des Triebwerks

Bei laufender Brennkraftmaschine 2 rotiert die Hohlwelle 19 entsprechend dem Übersetzungsverhältnis im Stirnradgetriebe 5. Dabei ist bei stehendem Motorrad die Drehzahl der Abtriebswelle 4 null. Die Kupplung 24 ist geöffnet und die Hydraulikpumpe 12 wird über die Hohlwelle 19 angetrieben. Durch Auslenken des Stellrings 14 wird die Hydraulkpumpe 12 so eingestellt, dass der Hydraulikmotor 13 und das mit letzterem verbundene Sonnenrad 9 entgegen der Drehrichtung der Hohlwelle 19 rotieren. Dabei ist die Abtriebswelle 4 lastfrei, da das Hohlrad 8 des Summierplanetengetriebes 7 kein Drehmoment überträgt.

Durch Schließen der Kupplung 24 wird die Hohlwelle 19 mit dem Hohlrad 8 verbunden und der Kraftfluss geschlossen. Das Anfahren des Motorrads erfolgt mittels der schleifenden Kupplung 24. Um ein gezieltes -weiches- Anfahren zu gewährleisten, wird die Brennkraftmaschine 2 mit niedriger Drehzahl betrieben. Nach dem Einkuppelvorgang ist eine kontinuierliche Verstellung der Getriebeübersetzung durch Änderung des Fördervolumens der Hydraulikpumpe 12 möglich. Die Drehzahl des Sonnenrads 9 wird hierbei von maximaler Drehzahl in entgegen gesetzter Richtung zum Hohlrad 8 bis zur Drehzahl Null reduziert und danach mit gleicher Drehrichtung wie das Hohlrad 8 erneut auf maximale Drehzahl beschleunigt. Dadurch kann nach dem Einkuppelvorgang durch Änderung der Drehzahl des Sonnenrads 9 eine kontinuierliche Beschleunigung des Motorrads bis zur Maximalgeschwindigkeit erreicht werden.

Dank des verstellbaren Hydraulikmotors 13 mit variablem Schluckvolumen besteht zusätzlich die Möglichkeit, die gesamte Getriebespreizung nochmals zu erhöhen. Bei gegebenem Fördervolumen der Hydraulikpumpe 12 wird die Drehzahl des Sonnenrads 9 durch Verringerung des Schluckvolumens erhöht und die Arbeitsdrehzahl weiter erhöht.

Im Falle kritischer Fahrzustände des Motorrads kann der Antriebsstrang durch Öffnen der Kupplung 24 unterbrochen werden.

Motorräder in entsprechender technischer Ausprägung sind auch rückwärts zu bewegen. Dies wird bei der vorliegenden Ausführung dadurch erreicht, dass das Hohlrad 8 des Summierplanetengetriebes 7 gegenüber dem Gehäuse 30 blockiert wird. Hierdurch ist das Sonnenrad 9 mit dem Hydraulikmotor 13 verbunden, wobei durch Änderung des Fördervolumens an der Hydraulikpumpe 12 das Sonnenrad 9 angetrieben wird, dergestalt, dass das Motorrad mit geringen Geschwindigkeiten vor- und rückwärts fahrbar ist.

## Patentansprüche

1. Triebwerk für ein Kraftfahrzeug umfassend eine Brennkraftmaschine und ein eine Hydrostateinrichtung aufweisendes Getriebe, das zu einer Abtriebswelle führt, wobei die mit der Brennkraftmaschine (2) zusammenarbeitende Hydrostateinrichtung (6) des Getriebes (3) In Wirkerbindung mit einem Summierplanetengetriebe (7) steht, das mit der zum Antrieb des Kräftftührzeugs Abtriebswelle (4) verbunden ist,
wobei zwischen der Brennkraftmaschine (2) und der Hydrostateinrichtung (6) eine Kraftübertragungseinheit in Gestalt eines Stirnradgetriebes (5) wirksam ist,
wobei die Hydrostateinrichtung (6) eine Hydraulikpumpe (12) und einen Hydraulikmotor (13) umfasst;
dadurch gekennzüchnet, dass ein mit einem ersten Zahnrad (17) kämmendes zweites Zahnrad (18) des Stirnradgetriebes (5) unter Zwischenschaltung einer ersten Verbindungswelle (20) mit der Hydraulikpumpe (12) zusammenarbeitet,
wobei die erste Verbindungswelle (20) durch eine Hohlwelle (19) gebildet wird.

2. Triebwerk (1) nach Anspruch 1, **dadurch gekennzeichnet, dass** das Kraftfahrzeug ein Motorrad ist.

3. Triebwerk (1) nach einem der Ansprüche 1 bis 2, **dadurch gekennzeichnet, dass** das Fördervolumen der Hydraulikpumpe (12) verstellbar ist.

4. Triebwerk (1) nach Anspruch 3 oder 2, **dadurch gekennzeichnet, dass** das Schluckvolumen des Hydraulikmotors (13) konstant oder verstellbar ist.

5. Triebwerk (1) nach einem der Ansprüche 2 bis 4, **dadurch gekennzeichnet, dass** der Hydraulikmotor (13) über eine zweite Verbindungswelle (23) ein Sonnenrad (9) des Summierplanetengetriebes (7) antreibt.

6. Triebwerk (1) nach Anspruch 5, **dadurch gekennzeichnet, dass** die zweite Verbindungswelle (23) koaxial zur ersten Verbindungswelle (20) verläuft.

7. Triebwerk (1) nach den Ansprüchen 5 oder 6, **dadurch gekennzeichnet, dass** die erste Verbindungswelle (20) zumindest abschnittsweise die zweite Verbindungswelle (23) umgibt.

8. Triebwerk (1) nach einem der Ansprüche 1 bis 2, **dadurch gekennzeichnet, dass** zwischen der Hohlwelle (19) und dem Summierplanetengetriebe (7) eine Kupplung (24), vorzugsweise der Reibungsgattung, vorgesehen ist.

9. Triebwerk (1) nach Anspruch 8, **dadurch gekennzeichnet, dass** die Kupplung (24) als Lastschaltkupplung ausgeführt ist.

10. Triebwerk (1) nach Anspruch 8 oder 9, **dadurch gekennzeichnet, dass** die Kupplung (24) durch eine Mehrscheiben-Reibungskupplung (25) gebildet wird.

11. Triebwerk (1) nach einem der Ansprüche 8 bis 10, **dadurch gekennzeichnet, dass** die Kupplung (24) einerseits mit der ersten Verbindungswelle (20) und andererseits mit einem Hohlrad (8) des Summierplanetengetriebes (7) gekoppelt ist.

12. Triebwerk (1) nach einem der vorhergehenden Ansprüche, **dadurch gekennzeichnet, dass**
zwischen dem ersten Zahnrad (17) des Stirnradgetriebes (5) und der Brennkraftmaschine (2) ein Schwingungsdämpfer (22) geschaltet ist.

13. Verfahren zum Betrieb eines Triebwerks (1) nach einem oder mehreren der vorangehenden Ansprüche 2 bis 12 einem Motorrad, **gekennzeichnet durch** folgende Verfahrensschritte:
• bei einer laufenden Brennkraftmaschine (2) rotiert eine Hohlwelle (19) und treibt eine Hydraulikpumpe (12) an;
• beim Anfahren des Motorrads ist eine Kupplung (24) geöffnet, wobei **durch** Auslenken eines Stellrings (14) einer Hydraulikpumpe (12) ein Hydraulikmotor (13) und ein mit letzterem verbundenes Sonnenrad (9) entgegen der Drehrichtung einer ersten als Hohlwelle (19) ausgebildeten Verbindungswelle (20) rotieren,
• ein Hohlrad (8) eines Summierplanetengetriebes (7) überträgt zunächst kein Drehmoment, dergestalt, dass eine Abtriebswelle (4) lastfrei ist,
• **durch** Schließen der Kupplung (24) wird die Hohlwelle (19) mit dem Hohlrad (8) verbunden und ein Kraftfluss ist geschlossen.

14. verfahren nach Anspruch 13, **dadurch gekennzeichnet, dass**
das Anfahren des Motorrads durch Schleifen der Kupplung (24) erfolgt.

15. Verfahren nach den Ansprüchen 13 und 14, **dadurch gekennzeichnet, dass** zum Anfahren des Motorrads die Brennkraftmaschine (2) mit relativ niedriger Drehzahl betrieben wird.

16. Verfahren nach den Ansprüchen 13 und 14, **dadurch gekennzeichnet, dass** nach Schließen der Kupplung (24) eine kontinuierliche Verstellung der Getriebeübersetzung durch Änderung des Fördervolumens der Hydraulikpumpe (12) erfolgt, wobei die Drehzahl des Sonnenrads (9) durch maximale Drehzahl in entgegen gesetzter Richtung zum Hohlrad (8) bis zur Drehzahl Null reduziert wird und danach mit gleicher Drehrichtung wie das Hohlrad (8) wieder auf maximale Drehzahl beschleunigt wird.

17. Verfahren nach einem der Ansprüche 13 bis 16, **dadurch gekennzeichnet, dass** zum Betrieb des Motorrads mit relativ geringer Geschwindigkeit für Vorwärtsfahrt und Rückwärtsfahrt das Hohlrad (8) des Summierplanetengetriebes (7) mittels bspw. einer als eine Bremse (29) ausgebildeten Blockiereinrichtung zu einem feststehenden Gehäuse (30) festgesetzt wird, wodurch das Sonnenrad (9) über die zweite Verbindungswelle (23) mit dem Hydraulikmotor (13) der Hydrostateinrichtung (6) zusammenarbeitet, dergestalt, dass durch Veränderung des Förderstroms der Hydraulikpumpe (12) das Motorrad vorwärts und rückwärts bewegbar ist.

## Claims

1. A powertrain for a power-driven vehicle, comprising
an internal combustion engine and
a transmission provided with a hydrostatic device which leads to a driven shaft, wherein the hydrostatic device (6) of the transmission (3) cooperating with the internal combustion engine (2) is operatively connected to a summation planetary transmission (7), which is connected to the driven shaft (4) serving to drive the power-driven vehicle,
wherein a force transmission unit in the form of a spur gearing (5) is effective between the internal combustion engine (2) and the hydrostatic device (6), wherein the hydrostatic device (6) comprises a hydraulic pump (12) and a hydraulic motor (13),
**characterised in that**
a second toothed wheel (18) of the spur gearing (5), meshing with a first toothed wheel (17), is cooperating with the hydraulic pump (12) via an interconnection by a first connecting shaft (20),
wherein the first connection shaft (20) is formed by a hollow shaft (19).

2. The powertrain (1) according to claim 1, **characterised in that**
the power-driven vehicle is a motorcycle.

3. The powertrain (1) according to any one of the claims 1 to 2, **characterised in that**
the displacement volume of the hydraulic pump (12) is adjustable.

4. The powertrain (1) according to claim 3 or 2, **characterised in that**
the displacement of the hydraulic motor (13) is constant or adjustable.

5. The powertrain (1) according to any one of the claims 2 to 4, **characterised in that**
the hydraulic motor (13) drives a sun wheel (9) of the summation planetary transmission (7) via a second connecting shaft (23).

6. The powertrain (1) according to claim 5, **characterised in that**
the second connecting shaft (23) is coaxial with the first connecting shaft (20).

7. The powertrain (1) according to any one of the claims 5 or 6, **characterised in that**
the first connecting shaft (20) surrounds the second connecting shaft (23) at least in sections.

8. The powertrain (1) according to any one of the claims 1 to 2, **characterised in that**
a clutch (24), preferably of a friction type, is provided between the hollow shaft (19) and the summation planetary transmission (7).

9. The powertrain (1) according to claim 8, **characterised in that**
the clutch (24) is a powershift clutch.

10. The powertrain (1) according to claim 8 or 9, **characterised in that**
the clutch (24) is formed by a multi-disc friction clutch (25).

11. The powertrain (1) according to any one of claims 8 to 10, **characterised in that**
the clutch (24) is coupled on one side to the first connecting shaft (20) and on
the other side to a ring gear (8) of the summation planetary transmission (7).

12. The powertrain (1) according to any one of the preceding claims, **characterised in that**
an anti-vibration device (22) between the first toothed wheel (17) of the spur gearing (5) and the internal combustion engine (2) is in operation.

13. A method to operate a powertrain (1) according to one or several of the preceding claims 2 to 12 in a motorcycle **characterised by** the following process steps:
• with a running internal combustion engine (2), a hollow shaft (19) rotates and drives a hydraulic pump (12);
• when starting the movement of the motorcycle, a clutch (24) is open, wherein a hydraulic motor (13) and a sun wheel (9) connected to the latter rotate, due to a deflection of an adjustment ring (14) of a hydraulic pump (12), in a direction opposite to a direction of rotation of a first connection shaft (20) configured as hollow shaft (19),
• a ring gear (8) of a summation planetary transmission (7) initially transmits no torque, in such a manner that a driven shaft (4) is without load,
• by closing the clutch (24), the hollow shaft (19) is connected to the ring gear (8) and a flux of force is established.

14. The method according to claim 13, **characterised in that**
the starting of the movement of the motorcycle occurs by slipping of the clutch (24).

15. The method according to the claims 13 and 14, **characterised in that**
the internal combustion engine (2) is operated with a relatively low rotational speed for starting the movement of the motorcycle.

16. The method according to the claims 13 and 14, **characterised in that**
after closing the clutch (24), a continuous adjustment of the transmission ratio is made by adjusting the displacement volume of the hydraulic pump (12), wherein the rotational speed of the sun wheel (9) is reduced to a rotational speed of zero by a maximum rotational speed in the direction opposite to the direction of the ring gear (8) and then accelerated again in the same direction of rotation as the ring gear (8) to maximum rotational speed.

17. The method according to any one of the claims 13 to 16, **characterised in that** for operating the motor cycle at relatively low speed for driving forward or backward, the ring gear (8) of the summation planetary transmission (7) is locked, for example by means of a blocking device configured as a brake (29), to a stationary housing (30), whereby the sun wheel (9) is cooperating with the hydraulic motor (13) of the hydrostatic device (6) via the second connecting shaft (23) in such a manner that the motorcycle is forward and backward movable by changing the delivery rate of the hydraulic pump (12).

## Revendications

1. Mécanisme d'entraînement pour un véhicule à moteur comprenant
un moteur à combustion interne et
une transmission qui présente un dispositif hydrostatique qui mène à un arbre de sortie;
le dispositif hydrostatique (6) de la transmission (3) qui coopère avec le moteur à combustion interne (2) étant en relation fonctionnelle avec un engrenage planétaire totalisateur (7) qui est relié à l'arbre de sortie (4) qui sert à l'entraînement du véhicule à moteur;
une unité de transmission de force configurée comme un engrenage droit (5) étant active entre le moteur à combustion interne (2) et le dispositif hydrostatique (6);
le dispositif hydrostatique (6) comprenant une pompe hydraulique (12) et un moteur hydraulique (13);
**caractérisé en ce qu'**une
seconde roue dentée (18) de l'engrenage droit (5) qui s'engrène avec une première roue dentée (17) coopère avec la pompe hydraulique (12) avec intercalage d'un premier arbre de liaison (20);
le premier arbre de liaison (20) étant formé par un arbre creux (19).

2. Mécanisme d'entraînement (1) selon la revendication 1, **caractérisé en ce que**
le véhicule à moteur est une moto.

3. Mécanisme d'entraînement (1) selon l'une des revendications 1 à 2, **caractérisé en ce que**
le volume de refoulement de la pompe hydraulique (12) est réglable.

4. Mécanisme d'entraînement (1) selon la revendication 3 ou 2, **caractérisé en ce que**
le volume d'absorption du moteur hydraulique (13) est constant ou réglable.

5. Mécanisme d'entraînement (1) selon l'une des revendications 2 à 4, **caractérisé en ce que**
le moteur hydraulique (13) entraîne une roue solaire (9) du engrenage planétaire totalisateur (7) par un second arbre de liaison (23).

6. Mécanisme d'entraînement (1) selon la revendication 5, **caractérisé en ce que**
le second arbre de liaison (23) est situé coaxial du premier arbre de liaison (20).

7. Mécanisme d'entraînement (1) selon les revendications 5 ou 6, **caractérisé en ce que**
le premier arbre de liaison (20) entoure le second arbre de liaison (23) au moins par section.

8. Mécanisme d'entraînement (1) selon l'une des revendications 1 à 2, **caractérisé en ce qu'**un
embrayage (24), de préférence du type à friction, est prévu entre l'arbre creux (19) et le engrenage planétaire totalisateur (7).

9. Mécanisme d'entraînement (1) selon la revendication 8, **caractérisé en ce que**
l'embrayage (24) est réalisé comme un embrayage de coupure de charge.

10. Mécanisme d'entraînement (1) selon la revendication 8 ou 9, **caractérisé en ce que**
l'embrayage (24) est formé par un embrayage à friction à disques multiples (25).

11. Mécanisme d'entraînement (1) selon l'une des revendications 8 à 10, **caractérisé en ce que**
l'embrayage (24) est couplé d'une part au premier arbre de liaison (20) et d'autre part à une couronne de train planétaire (8) du engrenage planétaire totalisateur (7).

12. Mécanisme d'entraînement (1) selon l'une des revendications précédentes, **caractérisé en ce qu'**un
amortisseur de vibrations (22) est monté entre la première roue dentée (17) de l'engrenage droit (5) et le moteur à combustion interne (2).

13. Procédé pour le fonctionnement d'un mécanisme d'entraînement (1) selon l'une ou plusieurs des revendications précédentes 2 à 12 dans une moto, **caractérisé par** les étapes de procédé suivantes :
• pour un moteur à combustion interne qui tourne (2), un arbre creux (19) est en rotation et entraîne une pompe hydraulique (12) ;
• lors du démarrage de la moto, un embrayage (24) est ouvert cependant qu'un moteur hydraulique (13) et une roue solaire (9) reliée à ce dernier sont en rotation, par l'excursion d'une bague de réglage (14) d'une pompe hydraulique (12), dans le sens inverse de la rotation d'un premier arbre de liaison (20) configuré comme un arbre creux (19),
• une couronne de train planétaire (8) d'un engrenage planétaire totalisateur (7) ne transmet tout d'abord pas de couple de rotation de telle manière qu'un arbre de sortie (4) est exempt de charge,
• par la fermeture de l'engrenage (24), l'arbre creux (19) est relié à la couronne de train planétaire (8) et un flux de force est établi.

14. Procédé selon la revendication 13, **caractérisé en ce que**
le démarrage de la moto se fait par patinage de l'embrayage (24).

15. Procédé selon les revendications 13 et 14, **caractérisé en ce que**,
pour le démarrage de la moto, le moteur à combustion interne (2) fonctionne avec un nombre de tours relativement faible.

16. Procédé selon les revendications 13 et 14, **caractérisé en ce qu'**après
la fermeture de l'embrayage (24) un réglage continu du rapport de transmission est effectué par une ajustement du volume de refoulement de la pompe hydraulique (12), le nombre de tours de la roue solaire (9) étant réduit jusqu'au nombre de tours zéro par le nombre de tours maximal en sens inverse par rapport à la couronne de train planétaire (8) et étant ensuite accéléré à nouveau au nombre de tours maximal avec le même sens de rotation que la couronne de train planétaire (8).

17. Procédé selon l'une des revendications 13 à 16, **caractérisé en ce que**,
pour le fonctionnement de la moto avec une vitesse relativement faible pour la marche avant et la marche arrière, la couronne de train planétaire (8) du engrenage planétaire totalisateur (7) est bloquée par rapport à un bâti stationnaire (30) au moyen, par exemple, d'un dispositif de blocage configuré comme un frein (29) si bien que la roue solaire (9) coopère, par le second arbre de liaison (23), avec le moteur hydraulique (13) du dispositif hydrostatique (6) de telle manière que, par une changement du flux de refoulement de la pompe hydraulique (12), la moto est mobile en avant et en arrière.
